# NEUE EUROPÄISCHE PATENTSCHRIFT

(11) **EP 1 148 328 B2**
(45) Veröffentlichungstag und Bekanntmachung des Hinweises auf die Entscheidung über den Einspruch: **28.12.2016**
(45) Hinweis auf die Patenterteilung: 23.11.2005
(21) Anmeldenummer: 01109655.9
(22) Anmeldetag: 19.04.2001
(51) Int. Cl.: G01M 17/02

(54) **Verfahren und Vorrichtung zur optischen Prüfung von Reifen**
Procedure and device for the optical testing of tyres
Procédé et dispositif d'essai optique de pneus

(30) Priorität: 19.04.2000 DE 10019386
(43) Veröffentlichungstag der Anmeldung: 24.10.2001
(73) Patentinhaber: Mähner, Bernward, 82275 Emmering (DE); Dengler, Stefan, 75365 Calw (DE)
(72) Erfinder: Mähner,Bernward, 83607 Holzkirchen (DE)
(74) Vertreter: Flügel Preissner Schober Seidel

(56) Entgegenhaltungen:
- EP-A- 0 893 670
- DE-C- 19 849 793

## Beschreibung

Es ist bekannt, daß zur Prüfung von Reifen, insbesondere vor deren Runderneuerung, Druckprüfmaschinen eingesetzt werden. Dabei wird der Reifen von niedrigem Druck auf hohen Druck aufgepumpt. Der Prüfer tastet mit den Händen Seitenwände und Lauffläche ab, während der Reifen sich dreht. Treten Beulen auf, welche Schädigungen anzeigen, so werden diese erkannt und der Test abgebrochen. Diese Vorgehensweise birgt ein hohes Unfall- und Verletzungsrisiko für den Bediener, da der Reifen während des Versuches beim Vorliegen schwerer Schäden in der Reifenstruktur bersten kann, bevor der Benutzer die Schadstelle erkannt hat und den Test abbrechen konnte.

Solche Gefahrenmomente können durch automatische Prüfverfahren und -vorrichtungen beseitigt werden. In der Patentschrift US 5313827 wird beispielsweise vorgeschlagen, die Prüfung derart durchzuführen, daß der Reifen einmal bei niedrigem Druck und ein zweites Mal bei hohem Druck entlang einer auf der Seitenwand verlaufenden Basislinie vermessen wird. Zum Auffinden der Strukturdefekte werden dann die bei niedrigem und die bei hohem Druck aufgenommene Basislinien verglichen. Die Messung der Basislinie kann dabei durch einen mechanischen Taster oder ein berührungsloses Punktmeßsystem erfolgen, wobei die Messung entlang der Basislinie dadurch erfolgt, daß der Reifen während der Messung kontinuierlich gedreht wird.

Aus der EP 0 893 670 A2 ist ein interferometrisches Verfahren zur segmentweisen Prüfung eines Reifens bekannt, wobei jedes Prüfsegmentes bei zwei unterschiedlichen Innendrücken des Reifens untersucht wird. Hierzu wird der Reifen mit kohärentem Licht bestahlt und vor sowie nach einer Änderung des Reifeninnendrucks mit einem Prüfkopf und einem Rechner jeweils ein Interferogramm der Reifenoberfläche in dem untersuchten Prüfsegment erzeugt. Die erzeugten Interferogramme werden jeweils in ein Modulo-2π-Bild umgesetzt, das wiederum zu einem Grauwertbild verarbeitet wird. Aus einem Vergleich der Grauwertbilder werden Informationen über vorhandene Defekte des Reifens in dem untersuchten Prüfsegment gewonnen. Danach wird der Reifen um den Betrag eines Prüfsegmentes weitegedreht und die Prüfung bei den zwei unterschiedlichen Innendrücken des Reifens für das nächste Prüfsegment wiederholt.

Die Patentschrift EP 0 823 623 B1 stellt ein interferometrisches Verfahren zum Prüfen von Reifen vor, bei dem der Reifen mit kohärentem Licht bestrahlt und die von dem Reifen zurückgestreute Strahlung in zwei Teilstrahlungen aufgeteilt wird. Die zwei Teilstrahlungen werden derart wieder zusammengeführt, dass die beiden Teilstrahlungen zueinander leicht versetzt sind (Shearing). Das verwendete Shearing Modul wird dabei so justiert, daß die Scherrichtung radial zum Reifen hin ausgerichtet ist. Da das vorgestellte Meßverfahren interferometrisch arbeitet, muß die Messung derart durchgerührt werden, daß sektorweise geprüft wird, wobei für jeden Sektor jeweils der Reifendruck geändert werden muß. Die erforderliche Druckänderung ist aufgrund der überaus hohen Meßempfindlichkeit jedoch sehr gering.

Die kontinuierliche Messung entlang einer Basislinie besitzt den Vorteil, daß sie sehr schnell durchführbar ist. Der Nachteil ist allerdings, daß nur ein sehr kleiner Ausschnitt der Oberfläche geprüft wird. Hat ein Defekt einen größeren Abstand zur besagten Basislinie, so wird sich dieser nicht oder nur geringfügig auf die Basislinie auswirken und bleibt somit unerkannt. Ferner wird sich der Reifen durch die Drucksteigerung sowohl in Querrichtung als auch in radialer Richtung ausdehnen, so daß sich die Basislinie bei starrer Befestigung der Sensoren an der Prüfmaschine bezüglich der Reifenoberfläche verschiebt. Durch Unstetigkeiten auf der Reifenoberfläche, z.B. in Form von Fließnähten, Beschriftungsreliefs usw., kann es dann zu Störsignalen bei der Messung kommen, die dann fälschlicherweise als Strukturdefekte eingestuft werden.

Das vorgeschlagene interferometrische Verfahren besitzt den Nachteil, daß die Empfindlichkeit des Shearing Moduls ausschließlich durch Scherrichtung und Scherwinkel und nicht durch die Oberflächenform bestimmt wird. So wird die Dehnung beim Shearing bezüglich des dem Scherwinkel entsprechenden Abstandes der Bildpunkte und nicht bezüglich des wahren Abstandes der abgebildeten Oberflächenpunkte gemessen, so daß die Empfindlichkeit in Abhängigkeit vom Abstand des Objektes bezüglich des Shearing Moduls und in Abhängigkeit von der Neigung der Oberfläche bezüglich der Beobachtungsrichtung stark schwankt. Dies führt bei der konvex gekrümmten Außenfläche der Reifenseitenwand insbesondere in Kombination mit dem divergenten Strahlengang des Shearing Moduls dazu, daß selbst bei völlig gleichmäßiger Ausdehnung des Reifens viele Interferenzlinien in den Interferogrammen des Shearing Moduls sichtbar sind, obwohl die tatsächliche Dehnung des Reifens doch nahezu konstant ist. Ein Auffinden der tatsächlichen Strukturdefekte wird hierdurch stark behindert.

Die DE 198 49 793 C1 beschreibt ein Triangulationsverfahren zur berührungslosen Erfassung von Unebenheiten einer Reifenseitenwand, bei dem mit einer Kamera die Reifenseitenwand aufgenommen wird, auf die Lichtschnitte projiziert werden. Der Reifen wird um seine Rollachse gedreht, um eine dreidimensionale Darstellung der Oberfläche zu erhalten, aus der die Wölbung der Oberfläche extrahiert wird und vorhandene Kanten, die beispielsweise am Rand von Schriftzeichen auftreten, geglättet werden. Übrig bleibende Unebenheiten werden als Beulen gedeutet und, wenn sie einen Schwellenwert überschreiten, als Fehler angezeigt. Wenngleich dieses Verfahren eine schnelle Erkennung erheblicher Fehler ermöglicht, können verdeckte Fehler, die sich nicht zwangsläufig in einer erheblichen Deformation der Reifenseitenwand äußern, kaum erkannt werden.

Ausgehend von diesem Stand der Technik ist es Aufgabe der Erfindung, ein Verfahren und eine Vorrichtung anzugeben, die eine genaue, auf die Reifenoberfläche bezogene Ermittlung von Fehlern des Reifens ermöglichen. Das Verfahren soll mittels einer kostengünstigen Vorrichtung anwendbar sein und keinerlei Interaktion durch den Benutzer bedürfen, so daß ein Unfallrisiko völlig ausgeschlossen werden kann.

Diese Aufgabe wird durch das in Patentanspruch 1 angegebene Verfahren und die in Patentanspruch 27 angegebene Vorrichtung gelöst.

Vorteilhafte Weiterbildungen sind in den jeweiligen Unteransprüchen angegeben.

Erfindungsgemäß wird die Formänderung des Reifens aufgrund der Änderung des Reifendruckes dadurch erfaßt, daß Lichtschnitte auf die Oberfläche des Reifens projiziert werden, welche mit einer Kamera mit flächigem Bildsensor erfaßt werden. Bei der Kamera handelt es sich dabei vorzugsweise um eine Videokamera mit CCD-Chip. Es genügt nur einen Lichtschnitt zu projizieren, jedoch können auch gleichzeitig mehrere Lichtschnitte projiziert werden. Der Reifen wird gegenüber der Kamera und damit gleichzeitig gegenüber der Einrichtung zur Projektion der Lichtschnitte gedreht. Als Drehachse wird dabei vorzugsweise die Rollachse des Reifens verwendet. Die Aufnahme der Lichtschnitte durch die Kamera wird erfindungsgemäß bei definierten Drehstellungen des Reifens gegenüber der Kamera durchgeführt. Damit werden verschiedene Abschnitte der Reifenoberfläche nacheinander erfaßt. Durch die definierten Drehstellungen wird unter anderem sichergestellt, daß später die Messungen von unterschiedlichen Reifendrücken verglichen werden können. Um die Messung zügig durchführen zu können, wird der Reifen vorteilhafterweise kontinuierlich gegenüber der Kamera gedreht und die Lichtschnitte von der Kamera mit im Verhältnis zur Drehgeschwindigkeit kurzer Belichtungszeit aufgenommen. Hierzu wird die Kamera vorteilhafterweise mit einem mechanischen oder elektronischen Shutter ausgerüstet. In diesem Fall wird ferner vorteilhafterweise die Bildaufnahme der Kamera über eine geeignete Einrichtung, z.B. einen Induktionsschalter, mit der Drehbewegung des Reifens relativ zur Kamera synchronisiert, um die Lichtschnitte bei definierten Drehstellungen zu erhalten.
Es ist aber auch möglich den Reifen in definierten Schritten relativ zur Kamera zu drehen und die Aufnahme der Lichtschnitte bei stillstehendem Reifen durchzuführen. Erfindungsgemäß wird die dreidimensionale Form der Lichtschnitte über eine Triangulation durch das Bildverarbeitungssystem bestimmt. Aus der dreidimensionalen Form der Lichtschnitte wird die dreidimensionale Form des Reifens ermittelt. Dabei können ggf. vorhandene Lücken durch Interpolation geschlossen und Filter auf die Meßdaten angewendet werden, um diese zu bereinigen.
Erfindungsgemäß wird die Konturmessung bei unterschiedlichen Drücken wiederholt und die gemessenen Formgestalten der Reifenoberfläche bei unterschiedlichen Reifendrücken verglichen. Dazu werden vorteilhafterweise die Lichtschnitte von jeweils identischen Drehstellungen des Reifens bei unterschiedlichen Reifendrücken herangezogen. Die Druckänderung wird vorzugsweise derart durchgeführt, daß der Reifendruck ausgehend von einem geringen Anfangsdruck entweder kontinuierlich oder zwischen den Konturmessungen stufenweise gesteigert wird.

Bei der Bestimmung der Formänderung bringt nun das Vorliegen der wahren Oberflächenkontur ganz erhebliche Vorteile. Ausgehend z.B. vom Reifenwulst im Felgenbereich, kann die Formänderung tangential und orthogonal zur Reifenoberfläche genau untersucht werden. Dabei kann stets davon ausgegangen werden, daß sich der Reifenwulst bzw. das Felgenhorn durch die Druckänderung nicht nennenswert verformen. Wird gemäß einem Aspekt der Erfindung die Reifenschulter und die Seitenfläche des Reifens erfaßt, so ist auch eine Bestimmung der Durchmesseränderung möglich. Hierzu ist insbesondere der geometrisch markante Eckbereich der Reifenschulter geeignet.
Gemäß einem weiteren Aspekt der Erfindung kann die Formänderung des Reifens aufgrund der Druckänderung auch in ihre axiale und radiale Komponenten bezüglich der Rollachse des Reifens zerlegt werden. Dabei wird vorteilhafterweise die zur berechnenden Komponente senkrechte Dehnungsänderung in den betrachteten Konturlinien rechnerisch eliminiert. Zu Berechnung der axialen Verschiebungen wird demnach die radiale Dehnungsänderung und zur Berechnung der radialen Verschiebungen die axiale Dehnungsänderung eliminiert. Diese Vorgehensweise ist insbesondere dann von Vorteil, wenn die Seitenwand und/oder die Lauffläche des Reifens ein ausgeprägtes Oberflächenrelief aufweist. Dies ist auf der Seitenfläche wegen der üblichen Beschriftungsreliefs und auf der Lauffläche wegen des Profils praktisch immer der Fall. Durch die Elimination der radialen bzw. axialen Dehnung wird vermieden, daß die Verschiebung des Oberflächenreliefs senkrecht zur untersuchten Verschiebungsrichtung zu lokalen Unstetigkeiten im Verformungsverhalten führt.
Zur Beurteilung von lokalen Auffälligkeiten im Formänderungsverhalten können auch die Daten von benachbarten Querschnitten herangezogen werden, um Fehlentscheidungen zu vermeiden.
Die Suche nach Strukturdefekten wird vorteilhafterweise ununterbrochen bei laufender Prüfung durchgeführt. Wird ein Defekt entdeckt, so wird vorteilhafterweise der Überdruck im Reifen sofort abgebaut, um ein Bersten des Reifens zu verhindern.
Um beide Seiten des Reifens gleichzeitig erfassen zu können, werden vorteilhafterweise mehrere, z.B. zwei, Lichtschnittsysteme verwendet. Diese werden so zueinander angeordnet, daß sich die Lichtschnittsysteme beim gleichzeitigen Betrieb nicht gegenseitig stören. Hierzu ist es erforderlich, daß die erzeugten Lichtflächen und Lichtschnitte der jeweils anderen Lichtschnittsysteme für die Kameras nicht sichtbar sind. Die einzelnen Lichtschnittsysteme werden dazu beispielsweise am Reifenumfang versetzt angeordnet. Mit einem solchen System werden schwere Defekte auf jeden Fall rechtzeitig erkannt, so daß der Test abgebrochen werden kann, bevor der Reifen birst.

Da zur Bestimmung des Formänderungsverhaltens erfindungsgemäß die Kontur erfaßt wird, wird gemäß einem weiteren Aspekt der Erfindung die Formgestalt der Reifenoberfläche auch als solche untersucht und nicht nur das Formänderungsverhalten durch Vergleich von zwei oder mehr Oberflächenkonturen bestimmt. Diese Vorgehensweise ermöglicht es, Formfehler insbesondere Beschädigungen der Reifenseitenwand in Form von Materialausbrüchen, Riefen usw. zu lokalisieren. Zur Ermittlung der Formfehler in der Oberflächengestalt kann beispielsweise die Istgeometrie mit einer Sollgeometrie verglichen werden oder nach Stufen gesucht werden, deren Höhe einen bestimmten Schwellwert überschreitet. Vorteilhafterweise wird die gemessene Oberfläche des Reifens bei einem geringen Anfangsdruck zu Beginn des Prüflaufs auf Formfehler hin untersucht und beim Auffinden schwererer Schäden die eigentliche Druckprüfung nicht mehr durchgerührt.

Das Vorliegen der Reifenkontur kann vorteilhaft dazu genutzt werden, um dem Bediener Ort und Größe der bei der Prüfung gefundenen Defekte auf dem Reifen mitzuteilen. Hierzu werden die Ergebnisse beispielsweise als Polardiagramm dargestellt oder anschauliche Abwicklungen der Reifenoberfläche berechnet.

Im Folgenden wird ein Ausführungsbeispiel der Erfindung anhand von Zeichnungen erläutert.

In den Zeichnungen zeigen:
- Fig. 1:: ein System zur Prüfung von Reifen
- Fig. 2:: das in Fig. 1 gezeigte Prüfsystem in der Draufsicht
- Fig. 3:: die Lage und Orientierung der Lichtschnitte auf der Reifenseitenwand
- Fig. 4a:: den Vergleich von Konturlinien zum Auffinden von Strukturfehlern
- Fig. 4b:: die Auswirkung eines Strukturfehlers auf die Konturlinien
- Fig. 5a:: die Berechnung der reinen axialen Verschiebungen mit Elimination der radialen Dehnungsänderung.
- Fig. 5b:: die Berechnung der reinen radialen Verschiebungen mit Elimination der axialen Dehnungsänderung.

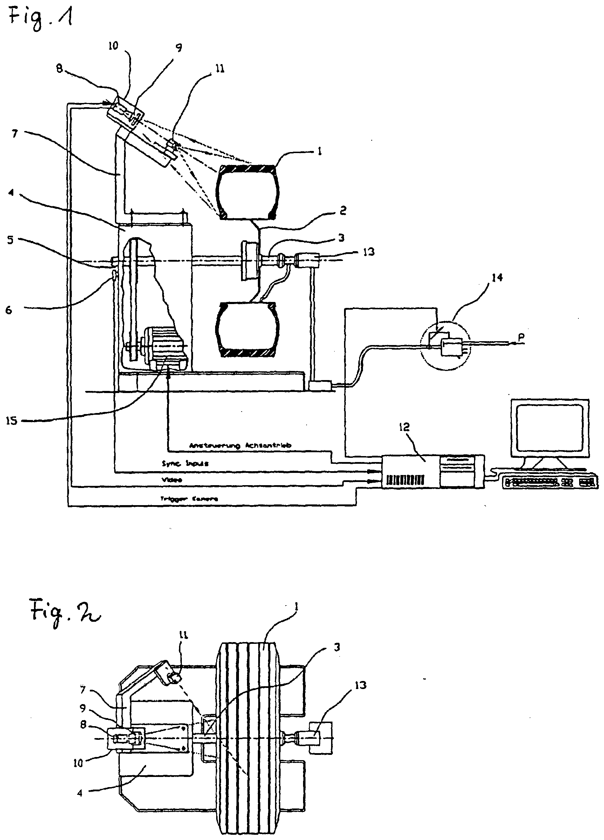

Die Figur 1 zeigt eine vereinfachte schematische Darstellung einer Vorrichtung zur Prüfung von Reifen gemäß einem Ausführungsbeispiel der Erfindung. Der Reifen 1 ist auf einer Felge 2 montiert und um die Achse 3 gegenüber dem Prüfstand 4 um seine Rollachse drehbar gelagert. Über eine Druckluftversorgung 13 mit einem Druckluftregler 14 kann der Reifendruck auch bei sich drehendem Reifen variiert werden. Das Prüfsystem besitzt ein über die Halterung 7 mit dem Prüfstand 4 fest verbundenes Lichtschnittsystem, bestehend aus einer Kamera 8 und einer Einrichtung 11 zur Projektion von Lichtschnitten. Die Kamera 8 kann eine handelsübliche Videokamera sein. Die Einrichtung 11 zur Projektion von Lichtschnitten besteht beispielsweise aus einem Laserscanner oder einem Laser dessen Strahl mittels einer Zylinderlinse aufgeweitet wird. Die von der Kamera 8 aufgenommenen Bilddaten werden einem Bildverarbeitungssystem 12 zur Weiterverarbeitung übermittelt. Die Bildaufnahme der Kamera 8 wird ferner über ein Triggersignal vom Bildverarbeitungssystem 12 ausgelöst. Die Achse 3 wird über den Motor 15 angetrieben und dreht den Reifen während der Messung mit konstanter Geschwindigkeit. Um die Drehbewegung des Reifens mit dem Bildeinzug der Kamera zu synchronisieren, sitzt auf der Drehachse 3 eine Indexmarke 5, die über den Sensor 6 erfaßt wird. Das beim Vorbeifahren der Indexmarke 5 am Sensor 6 erzeugte Signal wird vom Bildverarbeitungssystem 12 als Synchronisationsimpuls verwendet. In einer besonders einfachen und kostengünstigen Ausführungsform wird die Kamera 8 nur einmal pro Achsumdrehung mit der Drehbewegung synchronisiert und läuft ansonsten frei. Dadurch werden die definierten Drehstellungen durch das Zeitraster der Bildaufnahme der Kamera 8 und die Drehgeschwindigkeit des Achsantriebes festgelegt. Diese Vorgehensweise ist ausreichend genau, da das Zeitverhalten moderner Videokameras überaus exakt ist.
Um hohe Genauigkeiten bei der Formerfassung zu erzielen und dabei aber die Verwendung von hochauflösenden, teuren Kameras zu vermeiden, ist die Kamera 8 gemäß einem Aspekt der Erfindung mit einer anamorphotischen Optik 9 ausgerüstet, bei der die Abbildungsmaßstäbe in der Bildebene in horizontaler und vertikaler Richtung verschieden sind. Die Abbildungsmaßstäbe werden unabhängig voneinander so gewählt, daß einerseits in radialer Richtung Seitenwand und Reifenschulter vollständig erfaßt werden und daß andererseits die Auflösung in der Triangulationsebene möglichst groß ist.
Zum Schutz der optischen Einrichtungen vor Beschädigung durch einen berstenden Reifen ist die Kamera in einem Schutzgehäuse 10 untergebracht. Ein solches Schutzgehäuse wird vorteilhafterweise auch um die Einrichtung 11 angebracht.
Das Lichtschnittsystem ist so ausgerichtet, daß die Einrichtung 11 Lichtschnitte erzeugt, die die Seitenwand des Reifens 1 in radialer Richtung schneiden und über die Reifenschulter hinweg bis in den Laufflächenbereich hineinreichen. Die Kamera 8 ist gleichzeitig so ausgerichtet, daß der projizierte Lichtschnitt sowohl auf der Seitenwand als auch im Schulterbereich des Reifens 1 vollständig erfaßt wird. In der gezeigten Anordnung wird die Lichtschnittebene durch die Einrichtung 11 schräg auf die Seitenwand des Reifens projiziert. Hierdurch erhält man zwar keine exakt radial verlaufenden Lichtschnittlinien, es lassen sich aber problemlos große Triangulationswinkel und damit Systemauflösungen realisieren, weil die Lichtschnittebene im gesamten Projektionsbereich einen scharfen Lichtschnitt erzeugt. Wird hingegen die Kamera schräg angestellt, so ist eine Spezialoptik notwendig, um bei großen Triangulationswinkeln eine gleichmäßig gute Bildschärfe zu erzielen.
Zur Durchführung der Konturmessung wird der Reifen 1 um die Achse 3 mit einer Frequenz von etwa 0,5 Hz gedreht. Mit einer Standard Videokamera gemäß CCIR Norm können somit 50 Lichtschnitte am Umfang erfaßt werden. Bei langsameren Drehgeschwindigkeiten wird die Anzahl der Lichtschnitte entsprechend höher. Wird eine im interlaced Modus arbeitende Videokamera verwendet und jedes Halbbild getrennt belichtet so läßt sich diese Anzahl verdoppeln, wobei die Anzahl der Bildzeilen und damit die Anzahl der Meßpunkte pro Aufnahme halbiert wird.

Die Figur 2 zeigt das in Figur 1 dargestellte Prüfsystem in der Draufsicht. Es ist hier insbesondere der zwischen den optischen Achsen der Einrichtung 11 und der Kamera 8 liegende Triangulationswinkel zu erkennen.

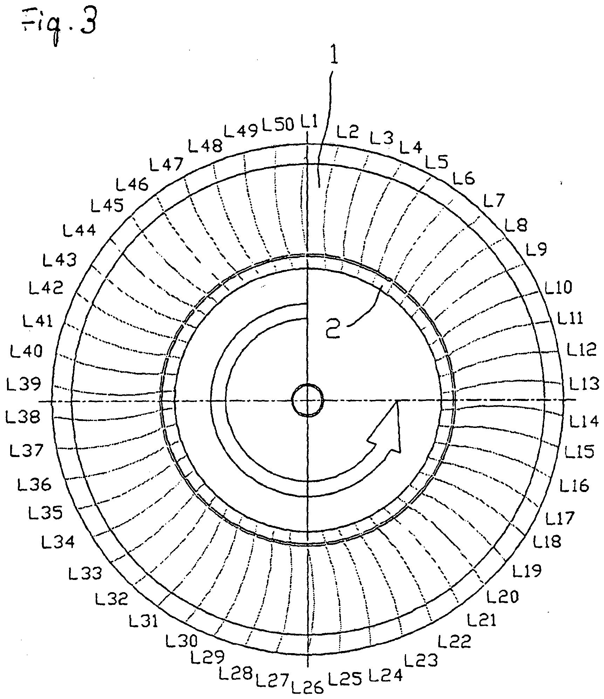

Die Figur 3 zeigt die Lage der Lichtschnitte bei der Messung der Reifenseitenwand mit dem in Figur 1 und Figur 2 gezeigten Prüfsystem. Bei der eingezeichneten Drehrichtung des Reifens 1 bzw. der Felge 2 werden bei einer Drehfrequenz des Reifens von 0,5 Hz und einer Bildaufnahmefrequenz von 25 Hz die eingezeichneten 50 Lichtschnitte L1 bis L50 erzeugt bzw. vermessen. Bei 50 Lichtschnitten vom Reifenumfang erhält man die Konturlinien L1 bis L50 in einem Abstand von jeweils 7,2°.

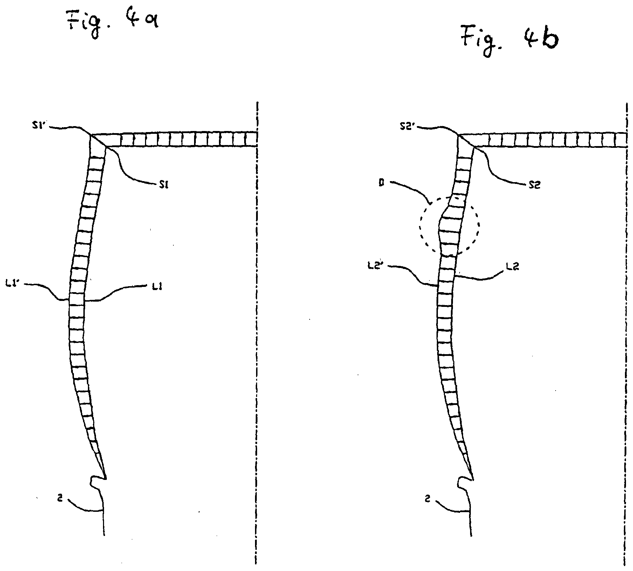

Die Figur 4a zeigt die Änderung einer Konturlinie bei Erhöhung des Reifendruckes. Die Konturlinie L1 entspricht einem niedrigen Druck, die Konturlinie L1' einem höheren Druck. Der äußerste Punkt der Reifenschulter S1 verschiebt sich dabei zum Punkt S1'. Da die Reifenschulter geometrisch eindeutig definiert ist, kann aus der Verschiebung S 1 → S1' u.a. die Gesamtdehnung der Konturlinie berechnet werden. Die Dehnungen können sehr genau bestimmt werden, weil alle Bezugslängen in wahrer Größe vorliegen bzw. bestimmt werden können.

Die Figur 4b zeigt das Verhalten des Reifens bei Druckerhöhung, falls ein Strukturdefekt vorliegt. Die Konturlinie L2 entspricht einem niedrigem Druck, die Konturlinie L2' einem höheren Druck. Im eingezeichneten Bereich D liegt ein Defekt vor, der zu einer lokalen Ausbeulung in diesem Bereich führt.

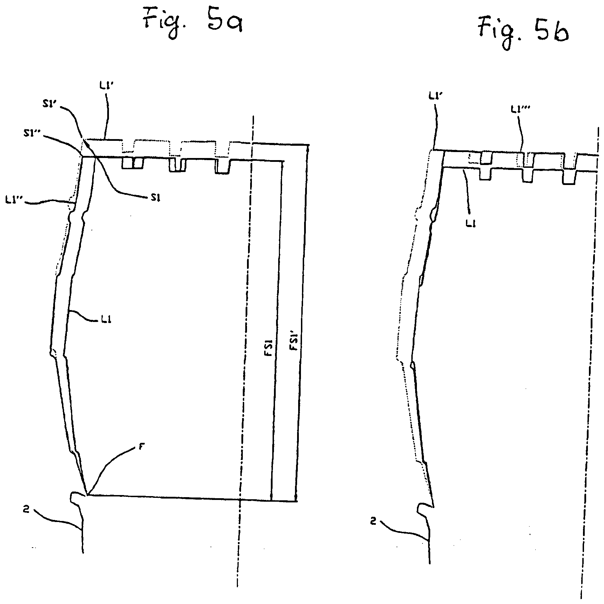

Die Figur 5a zeigt schematisch die Vorgehensweise bei der Berechnung der reinen axialen Verschiebungen mit Elimination der radialen Dehnungsänderung. Die Konturlinie L1 wird bei einem geringen Anfangsdruck gemessen und zeigt ein ausgeprägtes Oberflächenrelief sowohl in der Seitenwand als auch in der Lauffläche. Durch Erhöhung des Innendruckes dehnt sich der Reifen aus und bei der erneuten Messung wird die Konturlinie L1' gemessen. Die Ecken des Oberflächenreliefs verschieben sich dabei sowohl in radialer als auch in axialer Richtung. Um die axiale Verschiebung der identischen Oberflächenpunkte zu berechnen, wird zunächst die Dehnung der Konturlinie L1' bezüglich der Konturlinie L 1 in radialer Richtung bestimmt und anschließend rechnerisch eliminiert. Es entsteht hierdurch die Konturlinie L1". Das Formänderungsverhalten entlang der Konturlinie L1 in axialer Richtung wird anschließend durch punktweise Bestimmung des axialen Abstandes der Konturlinien L1 und L1" ermittelt.
Die Bestimmung der radialen Dehnungsänderung kann beispielsweise durch Berechnung der radialen Verschiebung des Schultereckpunktes S 1 ermittelt werden. Alle Verschiebungen werden vorteilhafterweise bezüglich der erfaßten Punkte von der Felge 2 gemessen. Die Dehnung der Konturlinie L1' bezüglich der Konturlinie L 1 in radialer Richtung wird aus den Strecken FS1 und FS1' berechnet.

Die Figur 5b zeigt schematisch die Vorgehensweise bei der Berechnung der reinen radialen Verschiebungen mit Elimination der axialen Dehnung. Um die radiale Verschiebung der identischen Oberflächenpunkte zu berechnen, wird zunächst die Dehnung der Konturlinie L1' bezüglich der Konturlinie L 1 in axialer Richtung bestimmt und anschließend rechnerisch beseitigt. Es entsteht hierdurch die Konturlinie L1'''. Das Formänderungsverhalten entlang der Konturlinie L1 in radialer Richtung wird anschließend durch Vergleich der Konturlinien L1 und L1''' ermittelt.

## Patentansprüche

1. Verfahren zur Prüfung von Reifen (1),
bei dem der Innendruck des Reifens (1) verändert wird,
die durch die Änderung des Innendruckes hervorgerufene Formänderung des Reifens ermittelt wird und aus der ermittelten Formänderung Strukturmerkmale und/oder -defekte des Reifens bestimmt werden,
wobei das Verfahren die Schritte aufweist, wonach:
wenigstens ein Lichtschnitt auf die Oberfläche des Reifens projiziert wird,
der projizierte Lichtschnitt mit einer Kamera (8) beobachtet wird,
der Reifen gegenüber der Kamera (8) gedreht wird, um mehrere Lichtschnitte zu erhalten,
die Aufnahme der projizierten Lichtschnitte durch die Kamera (8) bei definierten Drehstellungen des Reifens gegenüber der Kamera erfolgt,
die Bilder von den aufgenommenen projizierten Lichtschnitten einem Bildverarbeitungssystem (12) zugeführt werden,
über eine Triangulation vom Bildverarbeitungssystem (12) die Formgestalt der Lichtschnitte bestimmt wird,
aus der Formgestalt der Lichtschnitte die Formgestalt der Reifenoberfläche bestimmt wird, die Messung der Formgestalt der Reifenoberfläche bei unterschiedlichen Reifendrücken wiederholt wird
und die Formänderung des Reifens aufgrund der Innendruckänderung durch Vergleich der Formgestalten der Reifenoberfläche bei unterschiedlichen Reifendrücken ermittelt wird.

2. Verfahren nach Anspruch 1, **dadurch gekennzeichnet, daß** der Reifen gegenüber der Kamera um seine Rollachse gedreht wird.

3. Verfahren nach Anspruch 1 oder 2, **dadurch gekennzeichnet,**
**daß** zur Ermittlung der Formänderung des Reifens die gemessenen Lichtschnitte von jeweils identischen Drehstellungen des Reifens bei unterschiedlichen Reifendrücken herangezogen werden.

4. Verfahren nach Anspruch 1 bis 3, **dadurch gekennzeichnet,**
**daß** der Reifendruck kontinuierlich gesteigert wird.

5. Verfahren nach Anspruch 1 bis 3, **dadurch gekennzeichnet,**
**daß** der Reifendruck stufenweise gesteigert wird und die Formgestalt des Reifens jeweils nach Erreichen der einzelnen Druckstufen bei konstantem Reifendruck neu gemessen wird.

6. Verfahren nach Anspruch 1 bis 5, **dadurch gekennzeichnet,**
**daß** der Reifen gegenüber der Kamera in mehreren Schritten gedreht wird und die Erfassung der auf den Reifen projizierten Lichtschnitte jeweils zwischen den einzelnen Drehbewegungen erfolgt.

7. Verfahren nach Anspruch 1 bis 5, **dadurch gekennzeichnet,**
**daß** der Reifen gegenüber der Kamera eine kontinuierliche Drehbewegung durchführt.

8. Verfahren nach Anspruch 7, **dadurch gekennzeichnet,**
**daß** der Reifen mit konstanter Geschwindigkeit gegenüber der Kamera gedreht wird.

9. Verfahren nach Anspruch 7 oder 8, **dadurch gekennzeichnet,**
**daß** die Bildaufnahme der Kamera mit der Drehbewegung des Reifens gegenüber der Kamera synchronisiert wird.

10. Verfahren nach Anspruch 9, **dadurch gekennzeichnet,**
**daß** die Bildaufnahme der Kamera jeweils nur bei einer ausgewählten Drehstellung mit der Reifendrehbewegung synchronisiert wird und die darauffolgenden Drehstellungen durch das Zeitraster bzw. die Bildfrequenz der Kamera festgelegt werden.

11. Verfahren nach Anspruch 7 bis 10, **dadurch gekennzeichnet,**
**daß** die Kamera mit Halbbildern arbeitet, die zeitversetzt belichtet werden.

12. Verfahren nach Anspruch 1 bis 11, **dadurch gekennzeichnet,**
**daß** die die Lichtschnitte erzeugenden Lichtflächen Ebenen sind.

13. Verfahren nach Anspruch 12, **dadurch gekennzeichnet,**
**daß** die erzeugten Lichtschnittebenen so ausgerichtet sind, daß radial von innen nach außen verlaufende Lichtschnitte auf die Seitenfläche des Reifens projiziert werden.

14. Verfahren nach Anspruch 12 oder 13, **dadurch gekennzeichnet,**
**daß** die projizierten Lichtschnitte auf dem Bildsensor der Kamera derart abgebildet werden, daß die Bildauflösung senkrecht zu den Lichtschnittebenen größer ist als parallel dazu.

15. Verfahren nach Anspruch 1 bis 14, **dadurch gekennzeichnet,**
**daß** die Seitenwand des Reifens und die angrenzende Reifenschulter gleichzeitig erfaßt werden.

16. Verfahren nach Anspruch 1 bis 15, **dadurch gekennzeichnet,**
**daß** unter gleichzeitiger Verwendung mehrerer Lichtschnittsysteme die gegenüberliegenden Seitenflächen des Reifens parallel geprüft werden.

17. Verfahren nach Anspruch 1 bis 16, **dadurch gekennzeichnet,**
**daß** die Formänderung punktweise aus den Abständen der Oberflächenschnitte von verschiedenen Reifendrücken senkrecht zur Reifenoberfläche bestimmt wird.

18. Verfahren nach Anspruch 1 bis 17, **dadurch gekennzeichnet,**
**daß** die Dehnungen der Reifenoberfläche aus den Längen und den Längenänderungen der Oberflächenschnitte bestimmt werden.

19. Verfahren nach Anspruch 1 bis 18, **dadurch gekennzeichnet,**
**daß** zur Bestimmung des Formänderungsverhaltens punktweise die Verschiebungen der Oberflächenschnitte von verschiedenen Reifendrücken in bezüglich der Reifenrollachse axialer und/oder radialer Richtung berechnet werden.

20. Verfahren nach Anspruch 19, **dadurch gekennzeichnet,**
**daß** zur Berechnung der axialen Verschiebungen der Reifenoberfläche aufgrund einer Druckänderung die vorhandenen Dehnungsänderungen in radialer Richtung in den zur Berechnung der axialen Verschiebungen herangezogenen Oberflächenschnitten rechnerisch eliminiert werden.

21. Verfahren nach Anspruch 19, **dadurch gekennzeichnet,**
**daß** zur Berechnung der radialen Verschiebungen der Reifenoberfläche aufgrund einer Druckänderung die vorhandenen Dehnungsänderungen in axialer Richtung in den zur Berechnung der radialen Verschiebungen herangezogenen Oberflächenschnitten rechnerisch eliminiert werden.

22. Verfahren nach Anspruch 1 bis 21, **dadurch gekennzeichnet,**
**daß** das Bildverarbeitungssystem während der laufenden Prüfung fortlaufend und automatisch nach Strukturdefekten sucht.

23. Verfahren nach Anspruch 22, **dadurch gekennzeichnet,**
**daß** das Bildverarbeitungssystem unmittelbar nach Auffinden eines Strukturdefektes den vorhandenen Überdruck im Reifen abbaut und den Test abbricht.

24. Verfahren nach Anspruch 1 bis 23, **dadurch gekennzeichnet,**
**daß** die erfaßte Reifenoberfläche auf äußere Formfehler insbesondere Verletzungen hin untersucht wird.

25. Verfahren nach Anspruch 24, **dadurch gekennzeichnet,**
**daß** die Reifenoberfläche vor Beginn der Drucksteigerung auf äußere Formfehler hin untersucht wird.

26. Verfahren nach Anspruch 1 bis 25, **dadurch gekennzeichnet,**
**daß** die Ergebnisse der Prüfung in einem gemeinsamen Koordinatensystem dargestellt werden.

27. Vorrichtung zur Prüfung von Reifen (1), umfassend:
eine Einrichtung zur Aufnahme des Reifens (1);
einen Druckluftanschluss (13);
eine Einrichtung (14) zur Änderung des Reifendruckes;
**gekennzeichnet durch**
wenigstens ein Lichtschnittsystem, das
wenigstens eine Einrichtung (11) zur Projektion von Lichtschnitten auf den Reifen (1), die geeignet ist, ebene Lichtflächen zu erzeugen, die so ausgerichtet sind, dass die Lichtschnitte radial von innen nach außen verlaufend zumindest auf die Seitenfläche des Reifens (1) projiziert werden, und
eine Kamera (8) zur Beobachtung der projizierten Lichtschnitte auf dem Reifen (1) umfasst;
eine Vorrichtung (4) mit einer Drehachse (3), mit welcher der Reifen (1) gegenüber der Einrichtung (11) zur Erzeugung von Lichtflächen und der Kamera (8) gedreht wird;
ein Bildverarbeitungssystem (12), das die mit der Kamera (8) aufgenommenen Bilder weiterverarbeitet;
Mittel zur Erzeugung, Aufnahme und Weiterverarbeitung von projizierten Lichtschnitten;
Mittel zur Bestimmung der dreidimensionalen Oberflächenkontur des Reifens (1);
Mittel zur Bestimmung der dreidimensionalen Oberflächenkontur bei unterschiedlichen Reifendrücken;
Mittel zur Ermittlung der Formänderung des Reifens (1) bei Änderung des Reifendruckes und
Mittel zur Ermittlung von Strukturmerkmalen und/oder-defekten des Reifens (1).

28. Vorrichtung nach Anspruch 27, **dadurch gekennzeichnet,**
**daß** die Abbildungsoptik der Kamera (8) eine anamorphotische Optik (9) beinhaltet.

29. Vorrichtung nach Anspruch 27 bis 28, **dadurch gekennzeichnet,**
**daß** die Kamera (8) mit einem mechanischem oder elektronischen Shutter ausgerüstet ist.

30. Vorrichtung nach Anspruch 27 bis 29, **dadurch gekennzeichnet,**
**daß** die Kamera (8) nach dem Interlaced Verfahren und mit zeitlich versetzt belichteten Halbbildern arbeitet.

31. Vorrichtung nach Anspruch 27 bis 30, **dadurch gekennzeichnet,**
**daß** die Einrichtung (11) zur Projektion von Lichtschnitten aus einem Projektor mit einem optischen Gitter besteht.

32. Vorrichtung nach Anspruch 27 bis 30, **dadurch gekennzeichnet,**
**daß** die Einrichtung (11) zur Projektion von Lichtschnitten aus ein oder mehreren Laserscannern besteht.

33. Vorrichtung nach Anspruch 27 bis 30, **dadurch gekennzeichnet,**
**daß** die Einrichtung (11) zur Projektion von Lichtschnitten aus ein oder mehreren Lasern mit einer Strahlaufweitungsoptik besteht.

34. Vorrichtung nach Anspruch 27 bis 33, **dadurch gekennzeichnet,**
**daß** das Prüfsystem einen Sensor (6) zum Auffinden wenigstens einer an der Drehachse (3) angebrachten Indexmarke (5) aufweist und der Sensor (6) ein Synchronisationssignal an das Bildverarbeitungssystem (12) und/oder die Kamera (8) sendet.

35. Vorrichtung nach Anspruch 27 bis 34, **dadurch gekennzeichnet,**
**daß** die Kamera (8) eine Schutzvorrichtung (10) aufweist, die die Kamera (8) vor Beschädigung durch einen berstenden Reifen schützt.

36. Vorrichtung nach Anspruch 27 bis 35, **dadurch gekennzeichnet,**
**daß** die Einrichtung (11) zur Projektion von Lichtschnitten eine Schutzvorrichtung aufweist, die die Einrichtung (11) vor Beschädigung durch einen berstenden Reifen schützt.

37. Vorrichtung nach Anspruch 27 bis 36, **dadurch gekennzeichnet,**
**daß** die Einrichtung (14) zur Einstellung des Reifendruckes eine Stellvorrichtung aufweist die vom Bildverarbeitungssystem (12) angesteuert wird.

38. Vorrichtung nach Anspruch 27 bis 37, **dadurch gekennzeichnet,**
**daß** die Achse (3) zum Drehen des Reifens (1) gegenüber der Kamera (8) und der Einrichtung (11) zur Projektion von Lichtschnitten motorisch angetrieben ist.

39. Vorrichtung nach Anspruch 38, **dadurch gekennzeichnet,**
**daß** der Antrieb der Achse (3) über das Bildverarbeitungssystem (12) angesteuert wird.

40. Vorrichtung nach Anspruch 27 bis 39, **dadurch gekennzeichnet,**
**daß** das Prüfsystem zwei oder mehr Lichtschnittsysteme aufweist, die die gegenüberliegenden Seitenflächen des Reifens parallel erfassen.

## Claims

1. Method for testing tyres (1),
wherein the internal pressure of the tyre (1) is changed,
the change in shape of the tyre caused by the change in internal pressure is determined,
and structural features and/or defects of the tyre are determined from the detected change in shape,
the method having the following steps, wherein:
at least one light section is projected onto the surface of the tyre,
the projected light section is observed with a camera (8),
the tyre is rotated relative to the camera (8) to obtain several light sections, the recording of the projected light sections through the camera (8) is performed at defined positions of rotation of the tyre relative to the camera,
the images of the recorded projected light sections are fed to an image processing system (12),
the shape structure of the light sections is determined by the image processing system (12) via a triangulation,
the shape structure of the tyre surface is determined from the shape structure of the light sections,
the measurement of the shape structure of the tyre surface is repeated at different tyre pressures,
and the change in shape of the tyre as a result of the change in internal pressure is determined by comparison of the shape structures of the tyre surface at different tyre pressures.

2. Method according to Claim 1, **characterised in that** the tyre is rotated relative to the camera around its rolling axis.

3. Method according to Claim 1 or 2, **characterised in that** the measured light sections of respectively identical positions of rotation of the tyre at different tyre pressures are used to determine the change in shape of the tyre.

4. Method according to Claim 1 to 3, **characterised in that** the tyre pressure is continuously increased.

5. Method according to Claim 1 to 3, **characterised in that** the tyre pressure is increased in stages and the shape structure of the tyre is measured again respectively at constant tyre pressure after the individual pressure stages have been reached.

6. Method according to Claim 1 to 5, **characterised in that** the tyre is rotated relative to the camera in several steps and determination of the light sections projected onto the tyre is performed respectively between the individual rotational movements.

7. Method according to Claim 1 to 5, **characterized in that** the tyre performs a continuous rotational movement relative to the camera.

8. Method according to Claim 7, **characterised in that** the tyre is rotated relative to the camera at constant speed.

9. Method according to Claim 7 or 8, **characterized in that** the image recording of the camera is synchronised with the rotational movement of the tyre relative to the camera.

10. Method according to Claim 9, **characterised in that** the image recording of the camera is synchronised with the rotational movement of the tyre respectively only at a selected position of rotation and the subsequent positions of rotation are defined by the time matrix or frame frequency of the camera.

11. Method according to Claim 7 to 10, **characterised in that** the camera operates with fields, which are exposed at staggered times.

12. Method according to Claim 1 to 11, **characterised in that** the light surfaces generating the light sections are planes.

13. Method according to Claim 12, **characterised in that** the generated light section planes are oriented so that light sections running radially from the inside outwards are projected onto the side surface of the tyre.

14. Method according to Claim 12 or 13, **characterised in that** the projected light sections are represented on the image sensor of the camera in such a way that the image resolution is higher perpendicular to the light section planes than parallel thereto.

15. Method according to Claim 1 to 14, **characterised in that** the side wall of the tyre and the adjoining tyre shoulder are evaluated at the same time.

16. Method according to Claim 1 to 15, **characterised in that** the opposing side surfaces of the tyre are tested in parallel by using several light section systems simultaneously.

17. Method according to Claim 1 to 16, **characterised in that** the change in shape is determined point by point from the distances between the surface sections of different tyre pressures perpendicular to the tyre surface.

18. Method according to Claim 1 to 17, **characterised in that** the expansions of the tyre surface are determined from the lengths and changes in length of the surface sections.

19. Method according to Claim 1 to 18, **characterised in that** to determine the shape change behaviour point by point, the displacements of the surface sections of different tyre pressures in axial and/or radial direction with respect to the tyre rolling axis are calculated.

20. Method according to Claim 19, **characterised in that** to calculate the axial displacements of the tyre surface as a result of a change in pressure, the changes in extension present in radial direction are arithmetically eliminated in the surface sections used for calculation of the axial displacements.

21. Method according to Claim 19, **characterised in that** to calculate the radial displacements of the tyre surface as a result of a change in pressure, the changes in extension present in axial direction are arithmetically eliminated in the surface sections used for calculation of the radial displacements.

22. Method according to Claim 1 to 21, **characterised in that** the image processing system continuously and automatically searches for structure defects during the current testing.

23. Method according to Claim 22, **characterised in that** directly after detection of a structure defect the image processing system reduces the overpressure present in the tyre and stops the test.

24. Method according to Claim 1 to 23, **characterised in that** the evaluated tyre surface is examined for external shape faults, in particular damages.

25. Method according to Claim 24, **characterised in that** the tyre surface is examined for external shape faults before the start of the pressure increase.

26. Method according to Claim 1 to 25, **characterised in that** the results of the test are represented in a joint coordinate system.

27. Device for testing tyres (1), comprising:
a means for receiving the tyre (1);
a compressed air connection (13)
a means (14) for changing the pressure of the tyre
**characterized in that**
at least one light section system which comprises
at least one means (11) for projecting light sections onto the tyre (1) which is adapted for generating plain light surfaces that are aligned in a manner that the light sections extending from the inside radially outwards are projected at least onto the side surface of the tyre (1), and
a camera (8) for observing the projected light sections on the tyre (1);
a device (4) with a rotary axle (3), with which the tyre (1) is rotated relative to the means (11) for generating light surfaces and to the camera (8);
an image processing system (12), which processes the images recorded with the camera (8);
means for generating, recording, and processing projected light sections;
means for determining the three-dimensional surface structure of the tyre (1)
means for determining the surface contour at different tyre pressures,
means for determining the change in shape of the tyre with a change in tyre pressure, and
means for determining structural features and/or defects of the tyre.

28. Device according to Claim 27, **characterised in that** the optical imaging unit of the camera (8) contains an anamorphotic lens system (9).

29. Device according to Claim 27 or 28, **characterised in that** the camera (8) is equipped with a mechanical or electronic shutter.

30. Device according to Claim 27 to 29, **characterised in that** the camera (8) operates according in interlaced mode and with fields exposed at staggered times.

31. Device according to Claim 27 to 30, **characterised in that** the means (11) for projecting light sections comprises a projector with an optical diffraction grating.

32. Device according to Claim 27 to 30, **characterised in that** the means (11) for projecting light sections comprises one or more laser scanners.

33. Device according to Claim 27 to 30, **characterised in that** the means (11) for projecting light sections comprises one or more lasers with an optical beam expansion system.

34. Device according to Claim 27 to 33, **characterised in that** the test system has a sensor (6) for detecting at least one index mark (5) attached to the rotary axle (3), and the sensor (6) transmits a synchronisation signal to the image processing system (12) and/or the camera (8).

35. Device according to Claim 27 to 34, **characterised in that** the camera (8) has a protective device (10), which protects the camera (8) from damage as a result of a burst tyre.

36. Device according to Claim 27 to 35, **characterised in that** the means (11) for projecting light sections has a protective device, which protects the means (11) from damage as a result of a burst tyre.

37. Device according to Claim 27 to 36, **characterised in that** the means (14) for adjusting the tyre pressure has a regulating device, which is actuated by the image processing system (12).

38. Device according to Claim 27 to 37, **characterised in that** the axle (3) is motor-driven to rotate the tyre (1) relative to the camera (8) and the means (11) for projecting light sections.

39. Device according to Claim 38, **characterised in that** the drive of the axle (3) is actuated via the image processing system (12).

40. Device according to Claim 27 to 39, **characterised in that** the test system has two or more light section systems, which evaluate the opposing side surfaces of the tyre in parallel.

## Revendications

1. Procédé d'essai de pneumatiques (1), selon lequel on modifie la pression intérieure du pneu (1), on mesure la déformation du pneu provoquée par cette modification de la pression intérieure et on détermine, à partir de la déformation mesurée, des caractéristiques et/ou des défauts de structure du pneu, le procédé comprenant les étapes consistant à projeter au moins une coupe optique sur la surface du pneu, à observer à l'aide d'une caméra (8) la coupe optique projetée, à tourner le pneu par rapport à la caméra (8) pour obtenir plusieurs coupes optiques, à réaliser l'enregistrement des coupes optiques projetées, à l'aide de la caméra (8), pour des positions angulaires définies du pneu par rapport à la caméra, à envoyer à un système de traitement d'images (12) les images des coupes optiques projetées enregistrées, à déterminer la forme des coupes optiques grâce à une triangulation effectuée par le système de traitement d'images (12), à déterminer la forme de la surface du pneu à partir de la forme des coupes optiques, à répéter la mesure de la forme de la surface du pneu pour des pressions différentes du pneu, et à déterminer la déformation du pneu, suite à la modification de la pression intérieure, en comparant les formes de la surface du pneu pour des pressions de pneu différentes.

2. Procédé selon la revendication 1, **caractérisé par le fait que** le pneu est tourné autour de son axe de roulement par rapport à la caméra.

3. Procédé selon la revendication 1 ou 2, **caractérisé par le fait que** pour déterminer la déformation du pneu, on utilise les coupes optiques mesurées dé positions angulaires identiques du pneu pour des pressions différentes du pneu.

4. Procédé selon les revendications 1 à 3, **caractérisé par le fait que** la pression du pneu est augmentée en continu.

5. Procédé selon les revendications 1 à 3, **caractérisé par le fait que** la pression du pneu est augmentée par paliers et la forme du pneu est de nouveau mesurée pour une pression de pneu constante, chaque fois qu'un nouveau palier de pression est atteint.

6. Procédé selon les revendications 1 à 5, **caractérisé par le fait que** le pneu est tourné en plusieurs pas par rapport à la caméra et l'enregistrement des coupes optiques projetées sur le pneu est effectué chaque fois entre les différents mouvements de rotation.

7. Procédé selon les revendications 1 à 5, **caractérisé par le fait que** le pneu exécute un mouvement rotatoire continu par rapport à la caméra.

8. Procédé selon la revendication 7, **caractérisé par le fait que** le pneu est tourné à une vitesse constante par rapport à la caméra.

9. Procédé selon la revendication 7 ou 8, **caractérisé par le fait que** la prise de vues de la caméra est synchronisée avec le mouvement rotatoire du pneu par rapport à la caméra.

10. Procédé selon la revendication 9, **caractérisé par le fait que** la prise de vues de la caméra est synchronisée avec le mouvement rotatoire du pneu uniquement pour une position angulaire sélectionnée, et les positions angulaires suivantes sont définies par la trame de temps ou la fréquence d'images de la caméra.

11. Procédé selon les revendications 7 à 10, **caractérisé par le fait que** la caméra travaille avec des trames qui sont exposées de façon décalée dans le temps.

12. Procédé selon les revendications 1 à 11, **caractérisé par le fait que** les surfaces optiques produisant les coupes optiques sont des plans.

13. Procédé selon la revendication 12, **caractérisé par le fait que** les plans de coupe optique produits sont orientés de manière telle que des coupes optiques s'étendant radialement de l'intérieur vers l'extérieur soient projetées sur la surface latérale du pneu.

14. Procédé selon la revendication 12 ou 13, **caractérisé par le fait que** les coupes optiques projetées sont reproduites sur le détecteur d'image de la caméra de manière telle que la résolution d'image qui est perpendiculaire aux plans de coupe optique soit supérieure à celle qui leur est parallèle.

15. Procédé selon les revendications 1 à 14, **caractérisé par le fait que** la paroi latérale du pneu et l'épaulement de pneu contigu sont enregistrés en même temps.

16. Procédé selon les revendications 1 à 15, **caractérisé par le fait que** les surfaces latérales opposées du pneu sont contrôlées en parallèle, en utilisant simultanément plusieurs systèmes de coupe optique.

17. Procédé selon les revendications 1 à 16, **caractérisé par le fait que** la déformation est déterminée point par point à partir des distances des coupes de surface pour des pressions de pneu différentes, perpendiculairement à la surface du pneu.

18. Procédé selon les revendications 1 à 17, **caractérisé par le fait que** les dilatations de la surface du pneu sont calculées à partir des longueurs et des variations de longueur des coupes de surface.

19. Procédé selon les revendications 1 à 18, **caractérisé par le fait que** pour déterminer le comportement de déformation, on calcule point par point les déplacements des coupes de surface pour des pressions de pneu différentes, dans la direction axiale et/ou radiale par rapport à l'axe de roulement du pneu.

20. Procédé selon la revendication 19, **caractérisé par le fait que** pour calculer les déplacements axiaux de la surface du pneu suite à une modification de pression, on élimine par le calcul les variations de dilatation existant dans la direction radiale dans les coupes de surface utilisées pour le calcul des déplacements axiaux.

21. Procédé selon la revendication 19, **caractérisé par le fait que** pour calculer les déplacements radiaux de la surface du pneu suite à une modification de pression, on élimine par le calcul les variations de dilatation existant dans la direction axiale dan les coupes de surface utilisées pour le calcul des déplacements radiaux.

22. Procédé selon les revendications 1 à 21, **caractérisé par le fait que** pendant que l'essai est en cours, le système de traitement d'images recherche en continu et de façon automatique des défauts structurels.

23. Procédé selon la revendication 22, **caractérisé par le fait qu'**immédiatement après avoir détecté un défaut structurel, le système de traitement d'images réduit la surpression régnant dans le pneu et interrompt l'essai.

24. Procédé selon les revendications 1 à 23, **caractérisé par le fait que** la surface de pneu enregistrée est examinée pour détecter des défauts de forme extérieurs, en particulier des détériorations.

25. Procédé selon la revendication 24, **caractérisé par le fait qu'**avant de commencer l'augmentation de pression, la surface du pneu est examinée pour détecter des défauts de forme extérieurs.

26. Procédé selon les revendications 1 à 25, **caractérisé par le fait que** les résultats de l'essai sont représentés dans un système de coordonnées commun.

27. Système d'essai de pneumatiques (1) comprenant
un dispositif (2) de réception du pneu (1),
une alimentation en air comprimé (13)
un dispositif (14) pour modifier la pression du pneu ;
**caractérisé par**
au moins un système de coupe optique qui comprend
au moins un dispositif (11) pour projeter des coupes optiques sur le pneu (1), qui est *en état* de produire *des surfaces **optiques plans*** qui sont orientés de manière telle que les coupe optiques s'étendant radialement de l'intérieur vers l'extérieur soient projetées au moins sur la surface latérale du pneu (1), et
une caméra (8) pour observer les coupes optiques projetées sur le pneu (1) ;
un dispositif (4) avec un axe de rotation (3) permettant de faire tourner le pneu (1) par rapport au dispositif (11) de génération de surfaces optiques et par rapport à la caméra (8) ;
un système de traitement d'images (12) qui exploite les images enregistrées par la caméra (8) ;
des moyens pour produire, enregistrer et traiter des coupes optiques projetées ;
des moyens pour déterminer le contour de surface *tridimensionnel* du pneu ;
des moyens pour déterminer le contour de surface ***tridimensionnel*** pour des pressions de pneu différentes ;
des moyens pour déterminer la déformation du pneu (1) en cas de changement de la pression de pneu ; et
des moyens pour déterminer des caractéristiques et/ou des défauts de structure du pneu (1).

28. Système selon la revendication 27, **caractérisé par le fait que** l'optique de reproduction de la caméra (8) comprend une optique anamorphotique (9).

29. Système selon les revendications 27 à 28, **caractérisé par le fait que** la caméra (8) est équipée d'un obturateur mécanique ou électronique.

30. Système selon les revendications 27 à 29, **caractérisé par le fait que** la caméra (8) fonctionne selon le procédé d'entrelacement et avec des trames exposées de façon décalée dans le temps.

31. Système selon les revendications 27 à 30, **caractérisé par le fait que** le dispositif (11) de projection de coupes optiques est constitué d'un projecteur muni d'un réseau optique.

32. Système selon les revendications 27 à 30, **caractérisé par le fait que** le dispositif (11) de projection de coupes optiques est constitué d'un ou plusieurs scanners au laser.

33. Système selon les revendications 27 à 30, **caractérisé par le fait que** le dispositif (11) de projection de coupes optiques est constitué d'un ou plusieurs lasers à optique d'étalage de faisceau.

34. Système selon les revendications 27 à 33, **caractérisé par le fait que** le système d'essai présente un détecteur (6) pour détecter au moins une marque de repère (5) placée sur l'axe de rotation (3) et le détecteur (6) envoie un signal de synchronisation au système de traitement d'images (12) et/ou à la caméra (8).

35. Système selon les revendications 27 à 34, **caractérisé par le fait que** la caméra (8) présente un moyen de protection (10) qui protège la caméra (8) contre des détériorations provoquées par l'éclatement d'un pneu.

36. Système selon les revendications 27 à 35, **caractérisé par le fait que** le dispositif (11) de projection de coupes optiques présente un moyen de protection qui protège le dispositif (11) contre des détériorations provoquées par l'éclatement d'un pneu.

37. Système selon les revendications 27 à 36, **caractérisé par le fait que** le dispositif (14) de réglage de la pression de pneu présente un moyen de commande qui est activé par le système de traitement d'images (12).

38. Système selon les revendications 27 à 37, **caractérisé par le fait que** l'axe (3) pour tourner le pneu (1) par rapport à la caméra (8) et par rapport au dispositif (11) de projection de coupes optiques est entraîné par moteur.

39. Système selon la revendication 38, **caractérisé par le fait que** le moyen d'entraînement de l'axe (3) est activé par l'intermédiaire du système de traitement d'images (12).

40. Système selon les revendications 27 à 39, **caractérisé par le fait que** le système d'essai présente deux ou plus de deux systèmes de coupe optique qui enregistrent en parallèle les surfaces latérales opposées du pneu.
